# EUROPEAN PATENT SPECIFICATION

(11) **EP 0 801 667 B1**
(45) Date of publication and mention of the grant of the patent: **14.10.1998**
(21) Application number: 95939428.9
(22) Date of filing: 15.12.1995
(51) Int. Cl.: C09D 9/00

(54) **COMPOSITION FOR THE REMOVAL OF MATERIALS CONTAINING POLYMERIC BINDERS**
EINE ZUSAMMENSETZUNG ZUR ENTFERNUNG VON KUNSTSTOFFBINDEMITTELN ENTHALTENDE ZUSAMMENSETZUNGEN
COMPOSITION PROPRE A L'ELIMINATION DE MATERIAUX QUI CONTIENNENT DES LIANTS POLYMERIQUES

(30) Priority: 21.12.1994 NL 9402175
(43) Date of publication of application: 22.10.1997
(73) Proprietor: Synthedur B.V., 3155 ZG Maasland (NL)
(72) Inventor: DORREPAAL, Wim, NL-3155 ZG Maasland (NL)
(74) Representative: De Hoop, Eric
(86) International application number: NL9500423
(87) International publication number: WO9619541

(56) References cited:
- GB-A- 1 589 315
- US-A- 2 508 215

## Description

The present invention relates to a composition for the removal of materials containing polymeric binders, which may or may not be cured, dried out and/or aged.

Such compositions are known. Their use includes wide spread application for the removal of paint coatings.

The bases of conventional paint removers are usually:
(a) solvents which attack the physical integrity of the paint film, or
(b) compounds which disintegrate the paint film chemically, such as acids and bases.

Methylene chloride is usually used as a solvent which attacks the physical integrity of the paint film. Given that there are certain objections to the use of methylene chloride, mixtures with methylene chloride as base have been suggested which do not have these disadvantages. Various additives are used in these mixtures:
- The application of evaporation-retarding compounds in order to extend the duration of action is known from, amongst others, US-A-4,645,617 and 4,309,322. Examples of evaporation-retarding compounds are paraffin waxes and propylene carbonate.
- The application of polar additives such as methanol, diethyl ether, dimethylformamide, water, propylene carbonate and toluene in order to intensify the action on specific coatings is known from, amongst others, US-A-4,854,973 and GB-A-2,163,446.
- The application of detergents/wetting agents/surfactants in order to obtain a quicker or more effective wetting of the substrate is also known.

A significant objection to the use of methylene chloride is its harmful character with respect to man and the environment. Recently, it has become apparent that this harmful nature is even more serious than was thought. Methylene chloride is now considered to be a carcinogenic substance and has a relatively low MAC value of 100 ppm. The current objections to the use of methylene chloride are extensively described in the "Proceedings of an International Conference on Reducing Risk in Paint Stripping", Febr. 12-13 1991, U.S. Environmental Protection Agency, Economics and Technology Division, Office of Toxic Substances, Washington DC. New developments in the field of paint removers are, therefore, directed predominantly at alternative solvents to replace methylene chloride and any other chlorinated hydrocarbon. The suggested solvents can usually be described as polar organic compounds whereby a clear preference is shown for the compound with the lowest possible molecular weight within the chosen chemical class, as is the case with the choice of methylene chloride within the class of chlorinated hydrocarbons.

Some examples are: N-methylpyrrolidone (US-A-4,120,810), γ-butyrolactone (US-A-5,106,525), dimethylformamide (US-A-3,702,304), dimethyl sulfoxide (US-A-2,694,658), methyl esters of lower dicarboxylic acids (US-A-4,927,556), lower esters, in particular acetates and formates, of lower alcohols (EP-A-0 409 130) and ethers with low molecular weights (EP-A-0 490 726).

US-A-4,089,164 and 5,011,121 describe additional solvents for improving the action and/or for lowering the costs of the mixture.

US-A-4,673,524 describes the use of methyl esters of lower dicarboxylic acids in cleaning materials for the hands for the removal of paint and other materials containing synthetic resin binders.

The solvents suggested as replacements for methylene chloride have various disadvantages. They are often expensive in comparison with methylene chloride. A number of them are of such a harmful character that their use is hardly an improvement on the use of methylene chloride, while products with a low flash point are also mentioned, use of which would increase the risk of fire. The smell of the solvents or additional solvents used are sometimes problematic for the intended application.

All solvents have the disadvantage that they contribute, to a greater or lesser degree, to the increase of V.O.C.s (volatile organic compounds) and the associated harmful character with respect to man and the environment.

Because paint removers contain harmful and/or inflammable fluids, the attendant distribution costs are high. Sufficient ventilation and/or safety measures are required when working with many paint removers: methylene chloride already exceeds the MAC value of 100 ppm on application indoors after a few tens of grams have evaporated.

A general problem with paint removers is the waste produced. Both the paint residues and the paint remover should be considered as chemical waste and nowadays adequate collection of the waste is required in order to be able to have this destroyed in a responsible manner. Particularly mixtures in which a volatile solvent has been used, easily lead to distribution of the dry paint residues around the workplace and pollution of the environment.

There is, therefore, a need for compositions for the removal of materials containing resinous binders which attack the integrity of the materials by way of the physical route, which have as base an active ingredient with the following characteristics:
(a) it does not evaporate noticeably,
(b) it is not very harmful to man or the environment,
(c) it is easy to collect together with the paint residues.

It has now been found that a composition containing β-alkylglycol ethers of propionitrile as active ingredient can easily remove materials which contain resinous binders which may or may not be cured, dried out or aged. The composition of the invention contains no chlorine, evaporates very little during application, is not corrosive with regard to the substrate and has few risks for man and the environment.

The composition of the invention is characterized in that it contains a compound of formula 1, wherein
R represents a C₁-C₆ alkyl group which may or may not be branched,
R₁ represents hydrogen or a methyl group, and
n is 1-3.

The compounds are easy to prepare from relatively inexpensive raw materials with the aid of a cyanoethylation reaction (see Kirk-Othmer, Encycl. Chem. Technol. 3rd ed., 1975, volume 7, pages 370ff) . In this reaction, acrylonitrile is reacted with a compound of formula 2 containing a hydroxyl group, wherein R, R₁ and n have the same meanings as in formula 1, in the presence of a strongly basic catalyst such as NaOH at a temperature between 20-60°C. A yield of > 95% of the compound of formula 1 is obtained.

The composition of the invention may contain almost exclusively one or more compounds of formula 1. Known additives can also be added to a mixture of the composition of the invention, for example, in order to obtain a more rapid action on a specific coating or to avoid excessive use, such as when cleaning tanks or technical installations with a mixture of water and a compound of the invention. Examples of additives are auxiliary solvents, thickeners, detergents and fillers. The composition of the invention can also be prepared as a suspension, for example in water.

The composition of the invention contains 2 to 100 % by weight of a compound of formula 1.

Although the compounds of formula 1 belong to the chemical class of nitriles, to which many highly toxic substances belong, it has been determined that they have an extremely low toxicity. For example, for the compound of formula 1 in which R represents a butyl group , R₁ represents hydrogen and n=1, the LD₅₀ is greater than 2 g/kg (acute oral toxicity on rats), while other toxicities are also exceptionally low.

The compounds of formula 1 have such a low volatility that there is hardly any noticeable evaporation - even when applied in thin films and without evaporation-retarding agents. A great practical advantage of the extremely low evaporation rate is that the action of the composition of the invention continues over several days. Coatings which are difficult to remove, such as those consisting of many layers or extremely old paint, or even textured paint which has been applied in thick coats, are easy to remove thanks to this characteristic.

The flash points of the compounds of formula 1 described above are considerably higher than 100°C which means that their application does not increase the risk of fire.

One practical advantage of the extremely low evaporation rate is the elimination of evaporation-retarding agents in paint remover formulas. Technical preparation not only becomes simpler because of this, but the common problem of paraffin-like substances making the treated substrate difficult to paint over is avoided. Secondly, partly thanks to the low toxicity - the packaging, distribution and storage costs are reduced. Thirdly, a big reduction in the evaporation will contribute positively to the working and environmental hygiene.

The softened film, together with the composition of the invention can be removed in strips with a scraper. These strips still show considerable cohesion and are therefore easy to collect. Because of this, the composition of the invention based on compounds of formula 1 can contribute to the lessening of the chemical pollution of the environment.

The composition of the invention can be applied as a coat to the material to be removed with the aid of a paint brush or spatula. Soiled objects can be immersed in the composition of the invention, which can solely consist of a compound of formula 1. Soiled objects can also be cleaned by rubbing them clean with a cloth soaked in a composition of the invention. The composition of the invention can also be used in low concentrations for, for example, removing the residues from reactors.

The composition of the invention is also very suitable for the removal of, for example, ink and glue residues.

The preparation and action of the composition of the invention will now be illustrated by the following examples. The compounds A-E of formula 1, wherein R, R₁ and n have the meanings given in the table A, were synthesized. Compound F was commercially obtained as 99% pure material (Aldrich Chemie).

**TABLE A**

| | A | B | C | D | E | F |
|---|---|---|---|---|---|---|
| R = | Methyl | Methyl | Butyl | Butyl | Hexyl | Ethyl |
| R₁ | Methyl | H | H | H | H | H |
| n = | 1 | 3 | 1 | 2 | 1 | 0 |

Mixtures containing compounds A-F as active ingredient and a cellulose derivative (for example, ethylhydroxyethyl cellulose such as Berol's Bermocol PR®, or hydroxypropylmethyl cellulose) as thickener and, if necessary, a few percent of a polar solvent such as water or ethylene glycol if the cellulose thickener developed insufficiently in the active ingredient, were prepared and their action was examined. The mixtures with compounds A-E are compositions according to the invention, while the mixture with compound F was made for comparison.

The paint systems tested were very old (at least 5 years) and professionally applied on selected substrates including the associated priming coatings, as shown in table B:

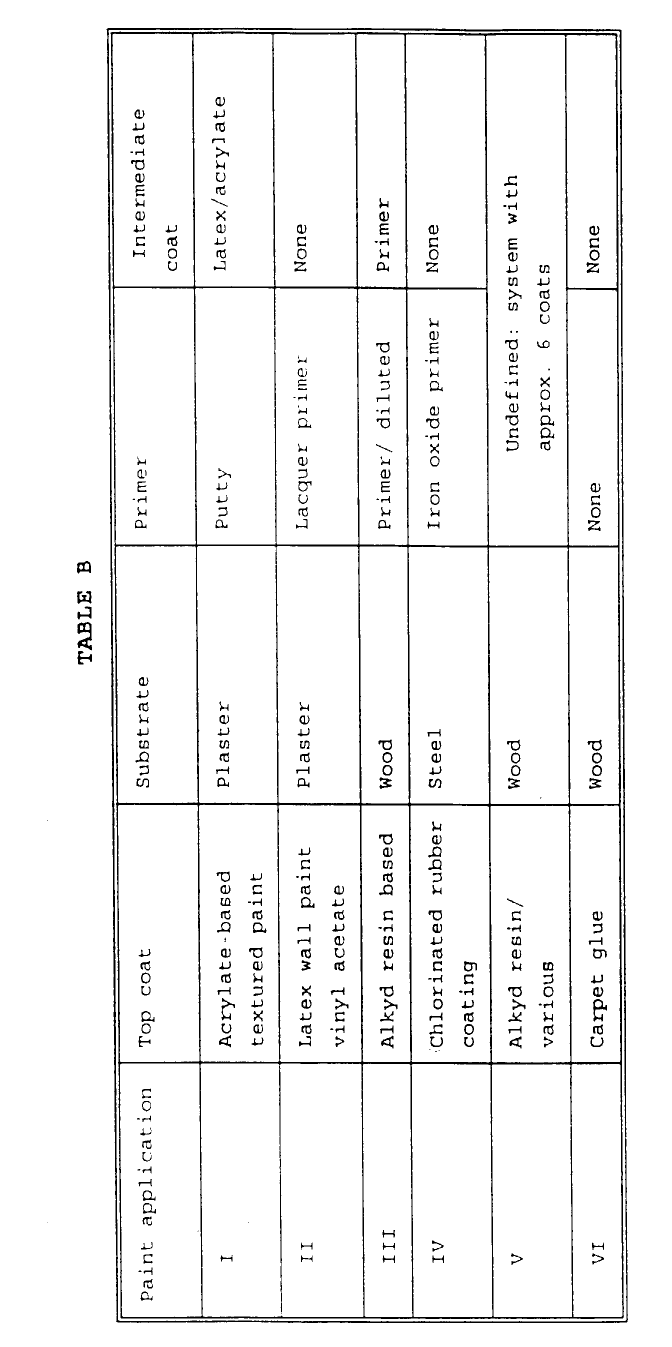

### Synthesis

Six hundred and seventy-five g of acrylonitrile is added, drop by drop over a period of 3 hours, to 1480 g of butylglycol in which 0.5 g 33% sodium hydroxide has been dissolved at a temperature of 45°C. Subsequently the reaction mixture is cooled to a temperature of 20°C and after 1 day neutralized with the calculated amount of acetic acid.

GLC analysis indicates that a yield of 98 mole % of the γ-butylglycol ether of propionitrile has been formed. This reaction product can be used for most applications without further purification.

### Example I

A paint removing mixture was prepared containing 96 parts of compound A, 2 parts of Bermocol PR® and 2 parts of water. Paint application III was treated with the paste so obtained and the result was assessed after 1, 6 and 24 hours, and after 7 days.

After 1 hour the surface of the paint coating had become softer, but was still difficult to remove.

After 6 hours the coating could be scraped off, although the primer coat remained partially intact.

After 24 hours the paint began to blister and the entire system was easy to remove. The primer residue could also be fully removed from the woodwork with a damp scouring sponge.

After 7 days the paint film had flaked off completely and was extremely easy to remove completely. The paint remover - without evaporation-retarding agent - had not yet dried out.

### Example II

A mixture containing compound B was prepared similarly to the method used for example I. Paint application II was treated with this paint removing paste. As early as 3 hours after application the wall paint could be scraped off the substrate with a putty knife. There was no appreciable evaporation of the paint remover after 7 days here either; the film had become very soft and was extremely easy to remove completely.

### Example III

Compound C was converted into a paint removing paste with the aid of hydroxybutyl cellulose (2.5%) and propylene glycol (3%). Paint application V was then treated with the mixture and the result was assessed over a period of 7 days. After the first 3 hours the result was incomplete. After 3-6 hours the film could be removed with a putty knife but the primer coats were still difficult to remove. After 12 hours the primer coats were sufficiently soft to be removed without problems.

After 1-7 days the paint film had developed such that it separated from the substrate. This paint remover also remained active over this period.

### Example IV

The carpet glue VI was treated with the mixture from example III (with compound C as base).

The glue was already sufficiently soft to be able to remove it mechanically within 1 hour.

Here too, the carpet glue treated with this paint remover could be scraped off after several days and the paint remover remained active.

### Example V

The mixture from example III was applied in a sufficiently thick layer to a heavily structured wall paint (application I). The minimum time required for a good action was approximately 6 hours in this case.

The structured wall paint could be removed without problems after 12 hours of action. Even after 14 days this structured paint could be removed easily in good, flexible cohesive strips with a broad putty knife. Collection of this paint waste was possible with a brush and pan, and caused no dust problem.

### Example VI

Paint removers with the compounds C, D, E and F as base, thickened with 0.8% hydroxybutyl cellulose derivative and 0.4% propylene glycol were compared by testing on high-gloss alkyd paint (application III).

The mixture with compound F as base already showed a good result after approximately 1 hour, and the mixture with compound C as base showed a good result after 3 hours. The mixture with compound D showed the beginnings of the softening of the paint system after approximately 6 hours and the mixture with compound E as base after approximately 12 hours.

After a duration of action of 24 hours, the mixture with compound F as base had already evaporated, and the removal of the paint system was problematic. With the other paint removing mixtures, on the other hand, the paint was extremely easy to remove in good, cohesive strips. Even after 7 days, the whole softened paint system which had been treated with paint removing formulas with the compounds C, D, and E as base could be removed as easily as after 24 hours action.

This test shows that compound F is useful as solvent in paint removing formulas, but its volatility makes its application in a composition of the invention impossible (more harmful, inflammable, difficult to collect together with the paint waste, not applicable after overnight action). It is also apparent from this example that the compounds of the general formula 1 which evaporate much more slowly, produce at least an equivalent result after a longer duration of action. This has the practical advantage that the removal of the treated paint system can take place over a much longer period.

### Example VII

The mixture from example III was tested on the chlorinated rubber coating from application IV.

After a duration of action of 2 hours, the paint system began to soften. This softening continued until after approximately 4 hours the paint could easily be scraped off with a putty knife.

After a duration of action of approximately 18 hours (overnight), the paint system was partially loose and extremely easy to scrape off the substrate in cohesive strips. Residues of the iron oxide primer could easily be removed with a damp scouring sponge. After this treatment, the substrate was in sufficiently good state to be given a completely new coating with epoxy resin immediately.

### Example VIII

An inking roller soiled with dried printing ink was coated with the mixture from example III.

After approximately 1 hour the ink layer could be completely rubbed off the roll with a cloth. With this product, the use of harmful solvents in closed spaces can be avoided without having to lose effectiveness. An associated advantage with regard to solvents such as toluene is the thickened composition which enables application in films on inclining or vertical surfaces. The possibility of cleaning soiled workpieces at the end of the day by allowing the mixture to work on them overnight is an improvement of the existing working method.

### Example IX

A sample of dried glue with a vinyl polymer as base, taken from a reactor, with a thickness of approximately 2 mm and a weight of approximately 4 g was placed in a magnetically stirred conical flask. A mixture of 250 ml water with 20 g compound C was added. The mixture was subsequently stirred at a temperature of 70°C for two hours. At this temperature, compound C separates from the water phase and attaches itself to the dried glue deposit. After a short period, the mixture begins to act and after 2 hours the glue deposit has changed to a semi-liquid structure. The results of this test show that even small percentages of the compounds of formula 1 in water cause polymeric binders to swell up effectively, so enabling their removal.

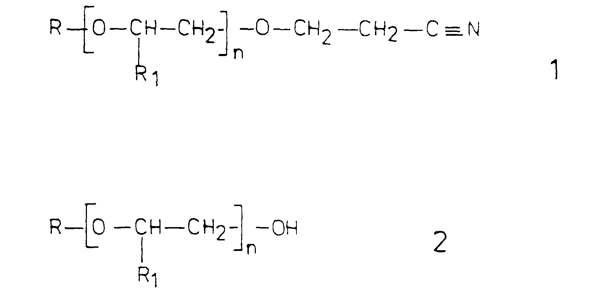

## Claims

1. A composition for the removal of materials containing polymeric binders, which may be cured, dried out and/or aged, **characterized in that** it contains a compound of formula 1, wherein R represents a C₁-C₆ alkyl group which may or may not be branched, R₁ represents hydrogen or a methyl group and n is 1-3.

2. A composition according to claim 1, **characterized in that** R represents a methyl, ethyl, butyl or hexyl group.

3. A composition according to claim 2, **characterized in that** R represents a butyl group, R₁ represents H and n is 1.

4. A composition according to any of the preceding claims, **characterized in that**, it contains from 2 to 100 % by weight of a compound of formula 1.

5. A composition according to claim 4, **characterized in that** it comprises 80-100 % by weight of a compound of formula 1.

6. A composition according to any of the preceding claims, **characterized in that** it exclusively contains one or more compounds of formula 1.

7. A composition according to any of the preceding claims, **characterized in that** it also contains a conventional additive such as a thickener, an auxiliary solvent, a detergent or a filler.

8. A composition according to claim 7, **characterized in that** it contains a thickener.

## Patentansprüche

1. Formulierung für die Entfernung von Materialien, die polymere Bindmittel enthalten, die gehärtet, ausgetrocknet und/oder gealtert sein können, **dadurch gekennzeichnet, dass** sie eine Verbindung der Formel 1 enthält, in der R eine C₁-C₆ Alkylgruppe, verzweigt oder nicht verzweigt, darstellt, R₁ Wasserstoff oder eine Methylgruppe darstellt und n 1-3 ist.

2. Formulierung nach Patentanspruch 1, **dadurch gekennzeichnet, dass** R eine Methyl-, Äthyl-, Butyl- oder Hexylgruppe darstellt.

3. Formulierung nach Patentanspruch 2, **dadurch gekennzeichnet, dass** R eine Butylgruppe darstellt, R₁ H darstellt und n gleich 1 ist.

4. Formulierung nach einem der vorstehenden Patentansprüche, **dadurch gekennzeichnet, dass** sie zu 2 bis 100% ihres Gewichts aus einer Verbindung der Formel 1 besteht.

5. Formulierung nach Patentanspruch 4, **dadurch gekennzeichnet, dass** sie zu 80 bis 100% ihres Gewichts aus einer Verbindung der Formel 1 besteht.

6. Formulierung nach einem der vorstehenden Patentsprüche, **dadurch gekennzeichnet, dass** sie ausschliesslich eine oder mehrere Verbindungen der Formel 1 enthält.

7. Formulierung nach einem der vorstehenden Patentansprüche, **dadurch gekennzeichnet, dass** sie zudem einen konventionellen Zusatzstoff enthält, wie ein Verdickungsmittel, Hilfslösemittel, ein Detergens oder einen Füllstoff.

8. Formulierung nach Patentanspruch 7, **dadurch gekennzeichnet, dass** sie ein Verdickungsmittel enthält.

## Revendications

1. Composition pour l'enlèvement de matériaux contenant des liants polymères pouvant être cuits, séches et/ou vieillis, **charactérisé en ce que** elle contient un composé de formule 1, où R réprésente un groupe alkylique C₁-C₆ ramifié ou non ramifié, R₁ représente l'hydrogène ou un groupe méthylique et n est 1-3.

2. Composition selon la revendication 1, **caractérisé en ce que** R représente un groupe méthylique, éthylique, butylique ou hexylique.

3. Composition selon la revendication 2, **caractérisé en ce que** R représente un groupe butylique, R₁ représente H et n est 1.

4. Composition selon l'une des revendications précédentes, **caractérisé en ce que** elle contient de 2 à 100% en poids d'un composé de formule 1.

5. Composition selon la revendication 4, **caractérisé en ce que** elle contient de 80 à 100% en poids d'un composé de fomule 1.

6. Composition selon l'une des revendications précédentes, **caractérisé en ce que** elle contient exclusivement un ou plusieurs composés de formule 1.

7. Composition selon l'une des revendications précédentes, **caractérisé en ce que** elle contient également un additif conventionnel, comme un épaississant, un dissolvant auxiliare, un détergent ou une charge.

8. Composition selon la revendication 7, **caractérisé en ce que** elle contient un épaississant.
